# DEMANDE DE BREVET EUROPEEN

(11) **EP 1 624 370 A2**
(43) Date de publication de la demande: **08.02.2006**
(21) Numéro de dépôt: 05291443.9
(22) Date de dépôt: 04.07.2005
(51) Int. Cl.: G06F 9/44

(54) **Procédé amélioré de création d'une interface homme-machine et plate-forme logicielle de création d'une telle interface**

(30) Priorité: 08.07.2004 FR 0407621
(71) Demandeur: K1 Sarl, 61200 Argentan (FR)
(72) Inventeur: Lefevre, Franck, 61200 Argentan (FR); Silberzahn, Nicolas, 14970 Benouville (FR)
(74) Mandataire: Maillet, Alain

(57) **Abrégé**

La présente invention concerne un procédé de création d'une interface homme-machine, en particulier une interface destinée à permettre à un utilisateur de contrôler le fonctionnement d'un terminal.

Le procédé selon l'invention, inclut les étapes suivantes :
. création d'objets neutres NOB et d'au moins un environnement ENV,
. création d'outils logiciels SWT dont chacun est apte à appliquer un traitement spécifique à au moins un objet O1, O2, O3...ON, au moins un outil logiciel étant apte à établir un lien entre un objet et un programme exécutable lorsque l'objet auquel est lié ce programme est soumis à une action spécifique par un utilisateur de l'interface

L'invention permet de construire de façon modulaire une interface homme-machine et d'observer et de modifier de façon aisée, en cours de conception, le comportement de ladite interface.

## Description

La présente invention concerne un procédé de création d'une interface homme-machine, en particulier une interface destinée à permettre à un utilisateur de contrôler le fonctionnement d'un terminal tel, par exemple, un radiotéléphone, un agenda électronique communicant, ou encore un distributeur automatique de billets, un ordinateur, ou tout autre dispositif de traitement de données informatisées.

De constants progrès en termes d'intégration et de performances des composants électroniques assurant le fonctionnement des terminaux mobiles de communication ont permis de conférer à ceux-ci un nombre sans cesse croissant de fonctionnalités, destinées à être gérées par des logiciels eux-mêmes de plus en plus complexes.

Ainsi par exemple, les radiotéléphones qui avaient pour fonction première de permettre des échanges vocaux à distance en ayant pour avantage d'être indépendants de toute base fixe permettent, dans l'état actuel de la technique, des échanges de données pouvant former des messages écrits, mais aussi des images statiques ou dynamiques, ainsi qu'un accès à des messageries électroniques et, plus généralement, un accès à des réseaux de transport de données tels le réseau Internet. Une gestion ergonomique de ces nombreuses fonctionnalités différentes devient ainsi de plus en plus difficile à imaginer, d'une part, et à réaliser effectivement, d'autre part. Or, il est de plus en plus crucial que l'interface homme-machine destinée à un tel radiotéléphone soit véritablement ergonomique, c'est-à-dire que sa manipulation doit sembler aussi naturelle que possible à l'utilisateur du radiotéléphone, sans quoi cet utilisateur n'aura pas le sentiment de le contrôler effectivement, et considérera alors avec méfiance différents services dont il est pourtant souhaitable, d'un point de vue économique, que cet utilisateur soit au contraire aussi friand que possible afin qu'il en fasse grande consommation.

Ainsi, il est courant qu'un fabriquant de radiotéléphone conçoive un volumineux cahier des charges définissant sur papier les caractéristiques d'une nouvelle interface homme-machine, fasse implanter une interface conforme à ce cahier des charges dans un prototype de radiotéléphone, avant de se faire livrer ce prototype et de tester *in situ* l'interface initialement conçue afin d'en vérifier l'ergonomie. Il s'avère alors souvent nécessaire de procéder à une modification du cahier des charges motivée par des imperfections constatées dans la définition théorique de l'interface, et donc de faire implanter une interface modifiée en conséquence dans un nouveau prototype destiné à un nouveau test *in situ* à l'issue duquel l'interface pourra encore devoir être modifiée.

Un tel processus de conception est très coûteux à mettre en oeuvre, ce qui est encore aggravé par le fait que les terminaux mobiles de télécommunication tels les radiotéléphones sont de plus en plus souvent fabriqués sur des lieux de production très éloignés des lieux de conception des interfaces homme-machine, qui sont, eux, usuellement situés dans les pays dans lesquels les terminaux sont destinés à être utilisés, afin de tenir compte de la culture des utilisateurs pour déterminer les critères d'ergonomie qui leur sont propres. Ainsi, une boucle de conception, fabrication et retour sur les lieux de conception impliquera des délais et des coûts de transport considérables puisque ces échanges seront souvent inter-continentaux.

Par ailleurs, un fabricant de terminaux mobiles de communication a bien souvent plusieurs clients potentiels, constitués par des opérateurs de réseaux de télécommunication, dont chacun souhaite affermir ses relations avec son client final, qui est l'utilisateur du terminal. Ainsi, les opérateurs ont actuellement pour stratégie commerciale d'utiliser autant que faire se peut le terminal en tant que support de signes distinctifs dans le but de rappeler aussi souvent que possible à l'utilisateur le lien qui l'unit à son opérateur et de renforcer ainsi ce lien dans l'inconscient de l'utilisateur. Chaque opérateur conçoit donc une charte graphique qui lui est propre et qui est en principe immédiatement identifiable par l'utilisateur. L'interface homme-machine d'un terminal, pièce maîtresse de l'interaction entre l'utilisateur et l'opérateur, doit ainsi respecter cette charte graphique. Un fabricant de terminaux mobiles de communication devra donc, pour chaque modèle de terminal composant sa gamme, concevoir autant d'interfaces différentes qu'il aura de clients différents, en l'occurrence les différents opérateurs susceptibles de sélectionner le modèle de terminal en question, la conception de chaque interface se faisant dans les conditions précédemment décrites avec les inconvénients qui en découlent, ce qui multiplie ainsi les coûts de conception pour les fabricants au point de les rendre difficilement tolérables, alors même que les fonctionnalités des terminaux ne pourront à l'avenir que gagner en complexité selon la tendance actuelle.

L'un des buts de l'invention est de remédier dans une large mesure aux inconvénients sus-décrits, en proposant un procédé de création d'une interface homme-machine qui peut être mis en oeuvre et configuré avec une grande flexibilité, et qui permet en outre une simulation de fonctionnement de l'interface ainsi générée sans requérir d'implantation effective de ladite interface au sein d'un prototype de terminal à la gestion duquel une telle interface est destinée.

En effet, un procédé conforme au paragraphe introductif est caractérisé selon l'invention en ce qu'il inclut les étapes suivantes :
- création d'au moins un objet neutre et d'au moins un environnement dans lequel une pluralité de tels objets est destinée à apparaître,
- création d'outils logiciels dont chacun est apte à appliquer un traitement spécifique à au moins un objet qui lui aura été préalablement désigné pour cible dudit traitement, au moins un outil logiciel étant apte à établir un lien entre un objet et un programme exécutable préalablement défini, lequel programme est destiné à être exécuté par une unité de traitement incluse dans le terminal lorsque l'objet auquel est lié ce programme est soumis à une action spécifique par un utilisateur de l'interface, et mise à disposition des objets, environnements et outils logiciels ainsi créés.

L'invention permet de construire de façon modulaire, élément par élément et fonction par fonction, une interface homme-machine, sur la base des objets neutres et de l'éventail des traitements qui peuvent leur être appliqués par les outils logiciels Un concepteur d'interface mettant en oeuvre le procédé selon l'invention pourra observer, dès la conception, le comportement dans leur environnement des différents objets en fonction des différents traitements que le concepteur aura choisi d'appliquer à ces objets en vue de construire l'interface. Ce concepteur pourra en outre aisément modifier les fonctionnalités de l'interface qu'il aura conçue, pour en améliorer par exemple l'ergonomie, puisque deux types de traitement différents sont réalisés selon un même principe d'application d'outils logiciels à des objets neutres, seuls les outils logiciels étant en eux-mêmes différents d'un type de traitement à l'autre.

De plus, puisque selon l'invention, l'interface est *a priori* construite intégralement sur la base d'éléments qui auront été préalablement testés et sécurisés et qui ne seront pas en eux-mêmes modifiables par un concepteur d'interface, il existe peu de risques pour qu'un virus informatique ou un quelconque vice de fonctionnement soient introduits dans ladite interface lors de sa conception, ce qui constitue un avantage supplémentaire par rapport aux méthodes de conception usuelles qui font souvent appel à des programmes informatiques créés pour l'occasion ou téléchargés depuis Internet.

Selon un mode de mise en oeuvre particulier de l'invention, au moins l'un des outils logiciels sera apte à appliquer à deux objets distincts préalablement désignés pour cibles un traitement spécifique consistant à établir un lien entre ces deux objets distincts.

Un tel mode de mise en oeuvre de l'invention particulier permet d'agencer en cascade une succession d'objets, et donc de réaliser des menus arborescents avec les avantages qui en découlent.

Selon une variante avantageuse de ce mode de mise en oeuvre particulier de l'invention, un lien établi entre deux objets distincts est rendu manifeste par une apparition simultanée de ces deux objets dans un même environnement préalablement affecté auxdits objets.

Cette variante permet une manipulation intuitive de menus arborescents générés en utilisant un procédé conforme à la variante décrite plus haut, puisque deux niveaux successifs d'un tel menu seront toujours simultanément visibles pour un utilisateur de ce menu.

Selon un mode de mise en oeuvre avantageux de l'invention, au moins l'un des outils logiciels sera apte à conférer une apparence préalablement définie à un objet qui lui aura été désigné pour cible.

Selon ce mode de mise en oeuvre avantageux de l'invention, un concepteur d'interface pourra aisément modifier l'apparence de l'interface qu'il aura conçue, sans nécessairement en changer les fonctionnalités, dans le but d'adapter une interface déjà conçue pour un certain client à une charte graphique définie par un autre client. Une telle adaptation pourra par ailleurs être aisément accompagnée de modifications fonctionnelles grâce à la modularité offerte par le procédé conforme à l'invention.

Selon un mode de mise en oeuvre préféré de l'invention, au moins l'un des outils logiciels sera apte à piloter un déplacement préalablement défini d'un objet dans un environnement qui aura été préalablement affecté audit objet.

Ce mode de mise en oeuvre préféré de l'invention permet un affichage dynamique des objets composant l'interface, qui confèrera à ladite interface une attractivité que ne présentera pas une interface uniquement constituée d'images statiques. L'attractivité d'une telle interface dynamique en renforce la convivialité, et favorise ainsi son ergonomie, qui est de plus intrinsèquement améliorée par la possibilité offerte à un utilisateur de piloter un déplacement d'objets qu'il aura sélectionnés selon des modalités prédéfinies.

L'invention concerne en outre, selon l'un de ses aspects matériels, une plate-forme logicielle permettant de créer une interface homme-machine, incluant :
- au moins un fichier définissant un objet neutre et au moins un autre fichier définissant un environnement dans lequel une pluralité de tels objets est destinée à apparaître,
- une pluralité d'outils logiciels dont chacun est apte à appliquer un traitement spécifique à au moins un fichier définissant un objet qui lui aura été préalablement désigné pour cible dudit traitement, au moins un outil logiciel étant apte a établir un lien entre un objet et un programme exécutable préalablement défini, lequel programme est destiné à être exécuté par une unité de traitement lorsque l'objet auquel est lié ce programme est soumis à une action spécifique par un utilisateur de l'interface.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 est un diagramme fonctionnel représentant succinctement une plate-forme logicielle conforme à l'invention,
La Fig.2 est un diagramme fonctionnel représentant schématiquement le fonctionnement d'un outil logiciel de traitement inclus dans une telle plate-forme, et
La Fig.3 est un schéma dynamique qui représente deux états successifs d'une interface homme-machine générée grâce à l'invention.

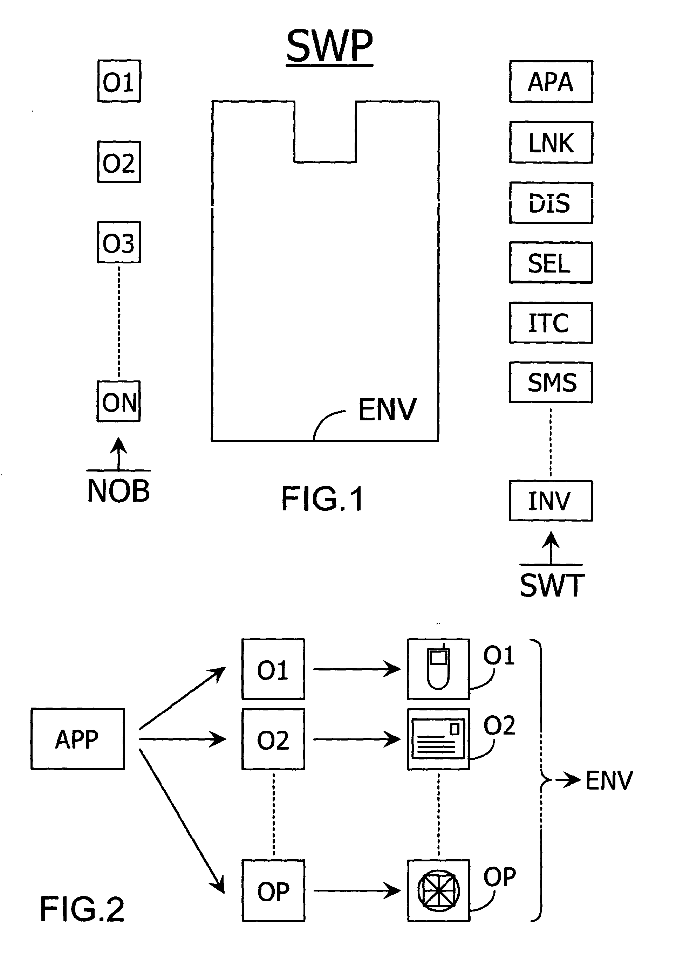

La Fig.1 représente schématiquement une plate-forme logicielle SWP permettant de créer une interface homme-machine. Cette plate-forme SWP inclut un ensemble NOB de fichiers définissant des objets neutres O1, O2, O3...ON qui apparaissent sur la présente Figure tels qu'affichés sur un écran en leur état initial, et au moins un autre fichier définissant un environnement ENV dans lequel ces objets neutres O1, O2, O3... ON sont destinés à apparaître en cours de fonctionnement de l'interface. Ces objets seront avantageusement constitués par des fichiers de type XML (abréviation de l'expression anglaise "eXtended Markup Language" connue de l'homme du métier), et seront de préférence manipulés par un navigateur compatible Java, de manière à rendre l'interface générée par son concepteur aisément simulable, d'une part, et aisément transportable et intégrable dans tout type de terminal adapté muni d'un tel navigateur Java, d'autre part.

La plate-forme SWP inclut en outre un ensemble SWT d'outils logiciels APA, LNK, DIS, SEL, ITC, SMS,...INV dont chacun est apte à appliquer un traitement spécifique à au moins un fichier définissant un objet qui lui aura été préalablement désigné pour cible dudit traitement. Dans l'exemple représenté ici, l'outil APA est apte à conférer une apparence préalablement définie à un objet qui lui aura été désigné pour cible, l'outil LNK est apte à appliquer à deux objets distincts préalablement désignés pour cibles un traitement spécifique consistant à établir un lien entre ces deux objets distincts, l'outil DIS est apte à piloter un déplacement préalablement défini d'un objet dans un environnement qui aura été préalablement affecté audit objet, l'outil SEL est apte à définir une action de sélection d'un objet et à établir un lien entre un objet sélectionné et un programme exécutable préalablement défini, l'outil ITC est apte à établir un lien entre un objet sélectionné et un programme exécutable destiné à établir une communication téléphonique, l'outil SMS est apte à établir un lien entre un objet sélectionné et un programme exécutable destiné à émettre un court message écrit de type SMS, et l'outil INV est apte à établir un lien entre un objet sélectionné et un programme exécutable destiné à lancer un navigateur internet.

Chacun de ces outils logiciels sera de préférence constitué par une application compatible Java. Le traitement spécifique appliqué à un fichier quelconque définissant un objet consistera alors pour une telle application à inscrire ou à modifier des paramètres de configuration dans le fichier XML qui définit cet objet. Ce traitement est ainsi purement déclaratif et n'implique *a priori* aucun travail de programmation de la part du concepteur de l'interface auquel la plate-forme logicielle SWP est destinée, lequel concepteur ayant seulement à associer et à configurer des objets au moyen d'outils logiciels de traitement inclus dans l'ensemble SWT, qui constitue une sorte de boîte à outils virtuelle.

La Fig.2 illustre le fonctionnement de l'outil logiciel de modification d'apparence APP. Un concepteur d'interface ayant sélectionné cet outil logiciel APP parmi les outils disponibles dans l'ensemble SWT sus-décrit désignera successivement pour cibles à cet outil des objets O1, O2...OP qu'il compte utiliser dans l'interface qu'il a conçue. Pour chacun de ces objets initialement neutres, le concepteur sélectionne au sein d'une bibliothèque d'images, non représentée ici, et qui lui est produite par l'outil APP une image à appliquer audit objet neutre en vue d'être ultérieurement utilisée en tant qu'icône représentative dudit objet. Chaque image pourra être par exemple être définie par un fichier de type ".bmp" ou "jpg" (abréviations respectives des expressions anglaises "bitmap" et "joint expert picture group" connues de l'homme du métier), une telle image pouvant en outre avoir été elle-même construite dynamiquement au moyen d'un ou plusieurs outils logiciels conformes à la description qui précède.

C'est ainsi que, dans l'exemple décrit ici, une icône symbolisant un téléphone est attribuée par le concepteur à l'objet O1, en vue de lier ultérieurement cet objet, ou d'autres objets qui y seront liés, à un programme exécutable destiné à établir une communication téléphonique. Une icône symbolisant un courrier est attribuée par le concepteur à l'objet O2, en vue de lier ultérieurement cet objet, ou d'autres objets qui y seront liés, à un programme exécutable destiné à émettre un message écrit de type "E-mail". Une icône symbolisant un réseau est attribuée par le concepteur à l'objet OP, en vue de lier ultérieurement cet objet, ou d'autres objets qui y seront liés, à un programme exécutable destiné à lancer un navigateur internet. Tous ces objets sont destinés à être affichés dans un environnement ENV préalablement choisi par le concepteur d'interface au sein d'une pluralité de tels environnements possibles, lesquels seront de préférence également définis par des fichiers paramétrables de type XML.

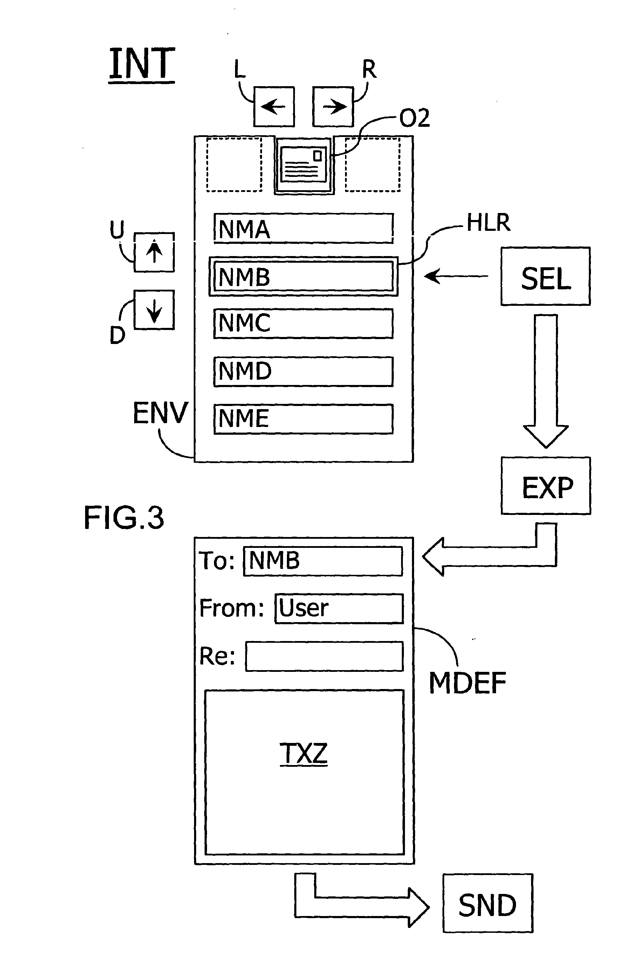

La Fig.3 représente schématiquement une phase de fonctionnement d'une interface homme-machine créée au moyen d'un procédé conforme à l'invention. Dans cette phase, des objets NMA, NMB, NMC, NMD et NME sont affichés simultanément au sein d'un environnement ENV avec un objet 02 auquel chacun desdits objets NMA, NMB, NMC, NMD et NME a été préalablement lié au moyen d'un outil logiciel spécifique conformément à la description qui précède. Il convient de noter ici que l'objet O2 fait partie d'un premier groupe d'objets aptes à être déplacés de manière horizontale de manière à apparaître un par un dans une fenêtre d'une pochette constituant dans cet exemple l'environnement ENV, les autres objets appartenant à ce groupe étant alors cachés et représentés ici en pointillés. Ce déplacement horizontal a été préalablement lié au moyen d'un outil logiciel spécifique à une action par un utilisateur de l'interface sur des touches de direction gauche et droite L et R, respectivement, conformément à la description qui précède, lesquelles touches de direction L et R permettent alors de faire défiler les objets du premier groupe dans la fenêtre de la pochette. Le premier groupe d'objets constitue une sorte de répertoire racine regroupant des icônes représentatives de diverses fonctionnalités générales offertes par le terminal, l'objet 02 sélectionné dans le présent exemple étant représentatif d'un accès à un service de messagerie électronique.

Les objets NMA, NMB, NMC, NMD et NME font partie d'un deuxième groupe d'objets hiérarchiquement subordonné au premier groupe, puisque tous les objets de ce groupe sont liés à l'un des objets du premier groupe, ce qui définit une arborescence, chacun des objets du deuxième groupe pouvant en outre avoir été lui-même relié à un autre groupe d'objets de niveau hiérarchique encore inférieur au moyen d'un outil logiciel adéquat, et ainsi de suite.

Dans l'exemple représenté ici, chaque objet du deuxième groupe NMA, NMB, NMC, NMD et NME contient une adresse d'un possible destinataire d'un message écrit. Un rectangle de mise en valeur HLR constitué par un objet préalablement défini comme apte à se mouvoir dans une direction verticale et préalablement lié au moyen d'un outil logiciel spécifique à une action par un utilisateur de l'interface sur des touches de direction haut et bas U et D, respectivement, permet de sélectionner un objet du deuxième groupe en tant qu'objet à lier à une exécution d'un programme de messagerie. Une telle sélection SEL, suivie de l'exécution EXP du programme de messagerie, conduit à un affichage d'une page de définition de message MDEF spécifiant directement une adresse de destination constituée par un paramètre issu du fichier correspondant à l'objet NMB sélectionné par l'utilisateur, ainsi qu'une identification de l'émetteur constitué par ledit utilisateur. Cette page de définition inclut bien sûr une zone de texte TZ destinée à contenir le message que l'utilisateur souhaite transmettre à ce destinataire, une telle transmission étant déclenchée par l'utilisateur par une action prédéterminée sur un autre objet SND préalablement lié à un programme d'exécution de transmission.

Il ressort de la description qui précède que l'invention permet de construire de façon modulaire, élément par élément et fonction par fonction, une interface homme-machine, sur la base d'objets neutres et d'un ensemble prédéterminé de traitements qui peuvent être appliqués à ces objets par des outils logiciels. Un concepteur d'interface mettant en oeuvre le procédé selon l'invention pourra ainsi aisément simuler l'interface qu'il aura conçue et modifier les fonctionnalités de cette interface, pour en améliorer par exemple l'ergonomie ou en changer l'aspect. Par ailleurs, bien que l'interface soit *a priori* construite intégralement sur la base d'éléments qui auront été préalablement testés et sécurisés et qui ne seront pas en eux-mêmes modifiables par un concepteur d'interface, il demeure envisageable d'autoriser un concepteur à créer par lui-même des outils logiciels complémentaires à ceux initialement rendus disponibles dans la plate-forme logicielle conforme à l'invention, de manière à rendre une telle plate-forme évolutive. La modularité de la plate-forme de création conforme à la présente invention permettra alors une intégration aisée de tels outils complémentaires, intégration qui sera parfaitement transparente pour un utilisateur ultérieur de la plate-forme ainsi enrichie.

## Revendications

1. Procédé de création d'une interface homme-machine destinée à permettre de contrôler le fonctionnement d'un terminal, lequel procédé inclut les étapes suivantes :
. création d'au moins un objet neutre et d'au moins un environnement dans lequel une pluralité de tels objets est destinée à apparaître,
. création d'outils logiciels dont chacun est apte à appliquer un traitement spécifique à au moins un objet qui lui aura été préalablement désigné pour cible dudit traitement, au moins un outil logiciel étant apte à établir un lien entre un objet et un programme exécutable préalablement défini, lequel programme est destiné à être exécuté par une unité de traitement incluse dans le terminal lorsque l'objet auquel est lié ce programme est soumis à une action spécifique par un utilisateur de l'interface, et
. mise à disposition des objets, environnements et outils logiciels ainsi créés.

2. Procédé de création selon la revendication 1, **caractérisé en ce qu'**au moins un outil logiciel est apte à appliquer à deux objets distincts préalablement désignés pour cibles un traitement spécifique consistant à établir un lien entre ces deux objets distincts.

3. Procédé de création selon la revendication 2, **caractérisé en ce qu'**un lien établi entre deux objets distincts est rendu manifeste par une apparition simultanée de ces deux objets dans un même environnement préalablement affecté auxdits objets.

4. Procédé de création selon l'une des revendications précédentes, **caractérisé en ce qu'**au moins un outil logiciel est apte à conférer une apparence préalablement définie à un objet qui lui aura été désigné pour cible.

5. Procédé de création selon l'une des revendications précédentes, **caractérisé en ce qu'**au moins un outil logiciel est apte à piloter un déplacement préalablement défini d'un objet dans un environnement qui aura été préalablement affecté audit objet.

6. Plate-forme logicielle permettant de créer une interface homme-machine, incluant :
. au moins un fichier définissant un objet neutre et au moins un autre fichier définissant un environnement dans lequel une pluralité de tels objets est destinée à apparaître,
. une pluralité d'outils logiciels dont chacun est apte à appliquer un traitement spécifique à au moins un fichier définissant un objet qui lui aura été préalablement désigné pour cible dudit traitement, au moins un outil logiciel étant apte à établir un lien entre un objet et un programme exécutable préalablement défini, lequel programme est destiné à être exécuté par une unité de traitement lorsque l'objet auquel est lié ce programme est soumis à une action spécifique par un utilisateur de l'interface.
